# Europäisches Patentamt
## European Patent Office
## Office européen des brevets

(19)

(11) **EP 0 519 112 B1**

(12) ## EUROPÄISCHE PATENTSCHRIFT

(45) Veröffentlichungstag und Bekanntmachung des Hinweises auf die Patenterteilung:
**13.03.1996 Patentblatt 1996/11**

(51) Int Cl.6: **F21V 7/09**, F21M 3/08, G02B 5/10

(21) Anmeldenummer: **91110286.1**

(22) Anmeldetag: **21.06.1991**

(54) **Reflektor und Verfahren zum Erzeugen einer Reflektorform**

Reflector and method of generating a reflector shape

Réflecteur et procédé de génération de la forme du réflecteur

(84) Benannte Vertragsstaaten:
**DE FR GB IT NL**

(43) Veröffentlichungstag der Anmeldung:
**23.12.1992 Patentblatt 1992/52**

(73) Patentinhaber: **Kano, Tetsuhiro**
**D-96049 Bamberg (DE)**

(72) Erfinder: **Kano, Tetsuhiro**
**D-96049 Bamberg (DE)**

(74) Vertreter: **von Hellfeld, Axel, Dr. Dipl.-Phys. et al**
**Wuesthoff & Wuesthoff**
**Patent- und Rechtsanwälte**
**Schweigerstrasse 2**
**D-81541 München (DE)**

(56) Entgegenhaltungen:
EP-A- 307 657          EP-A- 0 371 511
DD-A- 159 809          FR-A- 2 634 003
US-A- 4 984 140

**Beschreibung**

Die Erfindung betrifft einen Reflektor für von einer Strahlungsquelle ausgehende Strahlung mit einer Form derart, daß eine Reflektorschnittkurve in einer eine Achse des Reflektors und die Strahlungsquelle enthaltenden Ebene Segmente verschiedener gekrümmter, also nicht zu Geraden entarteter Kegelschnitte aufweist, die kantenfrei ineinander übergehen, wobei die Kegelabschnittsegmente direkt aneinandergefügt sind. Weiterhin betrifft die Erfindung auch ein Verfahren zum Erzeugen von Reflektorformen.

Der Begriff Reflektor ist hier allgemein zu verstehen und betrifft nicht nur die Reflexion optischer Strahlen (elektromagnetische Wellen), sondern Reflexion im gesamten Spektralbereich sowie auch die Reflexion anderer Wellen oder Strahlen, wie z.B. Schall (insbesondere bei Lautsprechern), Stoßwellen (insbesondere bei einem Lithotriptor für die medizinische Steinzertrümmerung) oder auch das Auffangen von elektromagnetischen Wellen (z.B. Parabolantenne).

Die hier in Rede stehenden Reflektoren haben unterschiedlichste Aufgaben. Beispielsweise kann es gewünscht sein, eine große Energiedichte in einem gewünschten Abstand vom Reflektor zu erreichen oder es kann auch eine homogene Energieverteilung in einem bestimmten Abstand vom Reflektor oder eine genaue Phasenabstimmung angestrebt sein.

Neben diesen unterschiedlichsten Aufgabenstellungen für Reflektoren ist weiterhin zu beachten, daß regelmäßig bestimmte Randbedingungen für die Reflektoren vorgegeben sind, wie deren Abmessungen und die Abstrahlungswinkel der Strahlungsquellen.

Aufgrund der vorstehend beschriebenen unterschiedlichen Aufgabenstellungen und Randbedingungen gibt es keine optimale Reflektorform, die universell alle Aufgaben lösen kann. In Abhängigkeit von der jeweils gestellten Aufgabe sowie den herrschenden Randbedingungen muß für jeden Anwendungsfall eine geeignete Reflektorform entwickelt werden.

Im Stand der Technik werden häufig den Reflektoren strahlungslenkende Elemente (wie Linsen od. dergl.) zugeordnet, um letztlich die gewünschte Verteilung der Strahlung zu erreichen. Mit anderen Worten: die Unvollkommenheit der Reflektorform hinsichtlich der Lenkung und Verteilung der Strahlung wird durch zusätzliche Bauteile überwunden.

Bei der vorliegenden Erfindung geht es um Reflektorformen, welche die Verwendung von zusätzlichen strahlungslenkenden Elementen (Linsen od. dergl.) überflüssig machen, d.h. der Reflektor alleine erzeugt die gewünschte Strahlungsverteilung.

Nachfolgend wird die Erfindung mit Blick auf Reflektoren für sichtbare elektromagnetische Strahlung (Licht) erläutert, jedoch lassen sich die Prinzipien ohne weiteres auf andere Reflexionsprobleme übertragen (z.B. auf die Führung von Stoßwellen in einem Lithotriptor).

Die Erfindung betrifft die Gestaltung von Reflektorformen mittels eines Computers. Grundsätzlich können mit einem Computer Strahlungsverteilungen, die mittels einer bestimmten Reflektorform erzeugt werden, vorab berechnet werden. Im Stand der Technik werden auch bereits Computer verwendet, um Reflektorformen zu bestimmen. Dabei basieren aber im Stand der Technik die Computerberechnungen auf Kegelschnitten und sind somit stark eingeschränkt. Die Erfindung zeigt neue Reflektorformen auf, die mittels eines Computers bestimmbar sind.

Ganz allgemein betrachtet sind bei der Konstruktion von Reflektoren folgende Gesichtspunkte (Kriterien) wesentlich:

1. Da bei einer Reflexion das Gesetz "Einfallswinkel gleich Ausfallswinkel" gilt, wäre es wünschenswert, einen Reflektor so zu konstruieren, daß die Tangenten an den einzelnen Stellen des Reflektors wahlweise geändert werden können.

2. Bei Reflektoren sollte die gesamte Form kontinuierlich glatt sein, d.h. keine Kanten aufweisen. Kantenfreiheit in diesem Sinne bedeutet, daß die Kurven "stetig differenzierbar" sind. Kanten würden helle Ringe (bei rotationssymmetrischen Reflektorformen) oder helle Streifen (bei rinnenförmigen Reflektorformen) im Lichtfleck erzeugen. In diesem Sinne bedeutet also "kantig", daß die Tangente an eine Reflektorschnittkurve, welche die zentrale Achse des Reflektors enthält, sich nicht kontinuierlich ändert, sondern sprunghaft. Durch eine solche sprunghafte Änderung überlagern sich Strahlen, die durch die vor und nach der Kante liegenden Kurvensegmente reflektiert werden, so daß die vorstehend erwähnten im allgemeinen unerwünschten hellen Ringe bzw. Streifen entstehen. Bei in dem Reflektor vorspringenden Kanten können dunkle Ringe und Streifen entstehen.

3. Um die von einem Reflektor erzeugte Strahlungsverteilung vorherbestimmen zu können, muß die Reflektorform so definiert sein, daß im Sinne des obigen Kriteriums (1) eine Bestimmung der Strahlungsverteilung erfolgen kann. Frei gezogene Kurven können diese Bedindung nicht erfüllen.

In Betracht der vorstehenden Aufgabenstellungen, Randbedingungen und Kriterien unterschiedlichster Art verwundert es nicht, daß im Stand der Technik vielfältigste Vorschläge für die Konstruktion von Reflektorformen vorliegen. Ausgangsform ist dabei regelmäßig der Kegelschnitt. Kegelschnittkurven haben den Vorteil, daß sie rechnerisch definiert und stetig sind, so daß die Strahlungsverteilung in einfacher Weise bestimmt werden kann. Allerdings haben Kegelschnittkurven (als Schnittkurven durch den Reflektor) den Nachteil, daß die Tangenten an die einzelnen Punkte des Reflektors nicht nach Bedarf geändert werden können. Vielmehr sind diese Tangenten fest vorgegeben. Beispielsweise ändert sich die an eine Parabel anlegbare Tangente über den Verlauf der Parabel so, daß vom Brennpunkt ausgestrahlte Strahlung zur optischen Achse parallel reflektiert wird. Solche Reflexionseigenschaften von kegelschnittförmigen Reflektoren können durch Änderung der Kegelschnittparameter nicht variiert werden.

Eine der wichtigsten und zugleich schwierigsten Aufgaben bei Reflektoren besteht in der Erzeugung einer homogenen Strahlungsverteilung (Lichtverteilung) ausschließlich mittels der Reflektorform (also ohne zusätzliche Hilfsmittel). Keine der bekannten Kegelschnittkurven kann diese Aufgabe lösen.

Die EP-A-0 371 511 offenbart einen Reflektor gemäß dem Oberbegriff des Anspruchs 1, der aus einem Kugelabschnitt und mehreren Abschnitten von Rotationsellipsoiden zusammengesetzt ist, die möglichst glatt ineinander übergehen sollen. Der Mittelpunkt des Kugelabschnitts und die ersten Brennpunkte der Rotationsellipsoide fallen zusammen. Die zweiten Brennpunkte der Rotationsellipsoide fallen auseinander und liegen auf der Achse des Reflektors in vorbestimmten Abständen vom gemeinsamen Brennpunkt.

In der FR-A-2 634 003 wird ein Reflektor offenbart, dessen Erzeugende aus Abschnitten von Kegelschnittkurven, nämlich von Parabeln und Ellipsen besteht, die jeweils einen gemeinsamen Brennpunkt aufweisen. Die einzelnen Abschnitte sind durch hyperbolische Zwischenbereiche miteinander verbunden. Es wird ein Näherungsverfahren angegeben, wie ein solcher Zwischenbereich zwischen zwei Ellipsen mit gemeinsamen ersten Brennpunkten eingefügt werden kann.

Die US-A-4 984 140 beschreibt einen Reflektor, der aus einem Abschnitt eines Rotationsparaboloids und einem Kegelabschnitt gebildet ist, wobei diese Bereich glatt aneinandergefügt sind. Außerdem wird ein Reflektor offenbart, der zwei parabelförmige Abschnitte mit einem dazwischen befindlichen, glatt anschließenden Kegelabschnitt aufweist.

Die Schrift DD-A-159 809 offenbart einen asymmetrischen Reflektor für röhren- oder stabförmige Lichquellen, dessen Hauptreflektor sich aus der gradlinigen Verschiebung einer Erzeugenden ergibt. Die Erzeugende setzt sich aus zwei nur näherungsweise parabelförmigen Abschnitten zusammen, die in der Vereinigungszone fertigungstechnisch knicktrei aneinander angeglichenen sind. An beiden Seiten des Hauptreflektors sind Seitenreflektoren angeordnet. Die Lichtquelle ist zwischen den beiden Brennlinien des Hauptreflektors angeordnet.

Die EP-A-0 307 657 beschreibt einen Scheinwerfer für Fahrzeuge, dessen Reflektor sich aus vier Segmenten verschiedener Formen zusammensetzt. Die einzelnen Segmente sollen stufenlos ineinander übergehen. Die Schrift lehrt nicht, wie ein solcher Reflektor mit stufenlosem Übergang konstruiert werden kann, ohne von exakten Kegelschnitt-Formen abzuweichen.

In der DE-A-37 44 563 findet sich ein sehr komplizierter Ansatz für einen Kraftfahrzeugscheinwerfer, bei dem ein Teil des Reflektors als Paraboloid ausgebildet ist, während ein zentraler Abschnitt einer sehr komplizierten mathematischen Funktion folgt, wobei der Übergang zwischen unterschiedlichen Abschnitten stetig differenzierbar gestaltet sein soll.

Die DE 35 07 143 lehrt die Aneinanderreihung von Segmenten verschiedener Kegelschnitte, wobei aber das Problem des Überganges zwischen unterschiedlichen Segmenten nicht gelöst ist, d.h. es verbleiben Kanten.

Das US-Patent 4 730 240 versucht solche Kanten zwischen unterschiedlichen parabolischen Segmenten dadurch zu vermeiden, daß der Übergang zwischen den Segmenten glatt (smoothly) gestaltet wird. Das Problem des Übergangs wird aber nicht allgemein gelöst, sondern es werden für den speziellen Fall explizit Koordinaten-Tabellen angegeben. Es wurde also nicht beschrieben, wie die Übergangskurve rechnerisch festgelegt werden kann. Somit erfüllt dieser Stand der Technik nicht das obige Kriterium (3) und die bekannte Reflektorkonstruktion ist höchst aufwendig.

Die europäische Patentanmeldung EP-A-0 402 740 (des Erfinders der vorliegenden Anmeldung) lehrt ein Verfahren zum Erzeugen unterschiedlicher Reflektorformen, welche nicht Kegelschnittkurven sind. Die Reflektorschnittkurven bei diesen bekannten Reflektorformen erfüllen die obigen drei Kriterien und ermöglichen somit die Konstruktion eines Reflektors, dessen Lichtverteilung **vorab** bestimmbar ist, bei dem also kein Experiment erforderlich ist, um die Strahlungsverteilung exakt zu ermitteln.

Das vorstehend genannte bekannte Verfahren zum Erzeugen einer Reflektorform hat allerdings den Nachteil, daß es sehr zeitaufwendig ist. Auch erscheint es hinsichtlich der Variabilität der Konstruktion verbesserungsfähig.

Der Erfindung liegt deshalb die Aufgabe zugrunde, einen Strahlungsreflektor zu schaffen sowie ein Verfahren zum Erzeugen einer Reflektorform aufzuzeigen, bei dem bzw. mit dem eine Strahlungsverteilung in gewünschter Weise ohne zusätzliche strahlungslenkende Mittel möglich ist, wobei das Verfahren möglichst vielseitig anwendbar und einfach durchführbar sein soll.

Ein erfindungsgemäßer Reflektor zur Lösung dieser Aufgabe ist dadurch gekennzeichnet, daß im Berührungspunkt zweier aneinandergefügter Kegelschnittsegmente die an beide Kegelschnittsegmente anlegbaren Tangenten gleich sind und daß die ersten Brennpunkte der Kegelschnittsegmente auseinanderfallen.

Zum Beispiel ist ein solches Auseinanderfallen bei einem aus Ellipsensegmenten zusammengesetzten Reflektor dann gegeben, wenn zumindest zwei erste Brennpunkte der Ellipsen existieren, die nicht zusammenfallen. Der Brennpunkt einer Parabel wird als "erster" Brennpunkt bezeichnet, so daß ein Auseinanderfallen bei einem aus Parabelsegmenten zusammengesetzten Reflektor dann gegeben ist, wenn zumindest zwei Brennpunkte der Parabeln existieren, die nicht zusammenfallen.

Vorteilhafte Ausgestaltungen dieses Reflektors sind in abhängigen Ansprüchen 2 bis 8 beschrieben. Hierbei soll unter "Kegelschnittart" die Einteilung von Kegelschnitten in Parabeln, Ellipsen und Hyperbeln verstanden werden. Kreise werden hierbei als Sonderfall von Ellipsen aufgefaßt, nämlich als solche Ellipsen, deren beide Brennpunkte im Kreismittelpunkt zusammenfallen.

Eine Weiterentwicklung des vorstehend genannten Reflektors findet sich im Anspruch 9.

Die Ansprüche 10 bis 13 beschreiben Verfahren zum Erzeugen von Reflektorformen, welche den obigen Kriterien (1) bis (3) genügen.

Nachfolgend werden Ausführungsbeispiele der Erfindung anhand der Zeichnung näher beschrieben. Es zeigt:

Fig.1    zwei Parabeln, mit deren Hilfe eine Reflektorform gemäß Fig.2 erzeugt wird;

Fig.2    eine Reflektorform in einer Schnittkurve;

Fig.3    ein weiteres Ausführungsbeispiel einer Reflektorschnittkurve;

Fig.4    eine Darstellung einer besonders einfachen Konstruktion einer Reflektorschnittkurve mit Hilfe von Parabeln;

Fig.5    ein Fig.4 entsprechendes Ausführungsbeispiel, wobei die Reflektorschnittkurve mittels Ellipsen gebildet wird;

Fig.6    eine weitere Konstruktion einer Reflektorschnittkurve;

Fig.7    eine Strahlungsverteilung durch einen erfindungsgemäß konstruierten Reflektor;

Fig.8    ein anderes Ausführungsbeispiel der Erzeugung einer Reflektorschnittkurve;

Fig.9    eine Strahlungsverteilung einer erfindungsgemäß erzeugten Reflektorform;

Fig.10   ein anderes Ausführungsbeispiel für die Konstruktion einer Reflektorschnittkurve;

Fig.11   eine Strahlungsverteilung eines erfindungsgemäß konstruierten Reflektors;

Fig.12   eine bekannte Reflektorform

Fig.13   ein weiteres Ausführungsbeispiel für eine Reflektorschnittkurve;

Fig.14   ein weiteres Ausführungsbeispiel für eine Reflektorschnittkurve und

Fig.15   einen nicht rotationssymmetrisch gestalteten Reflektor.

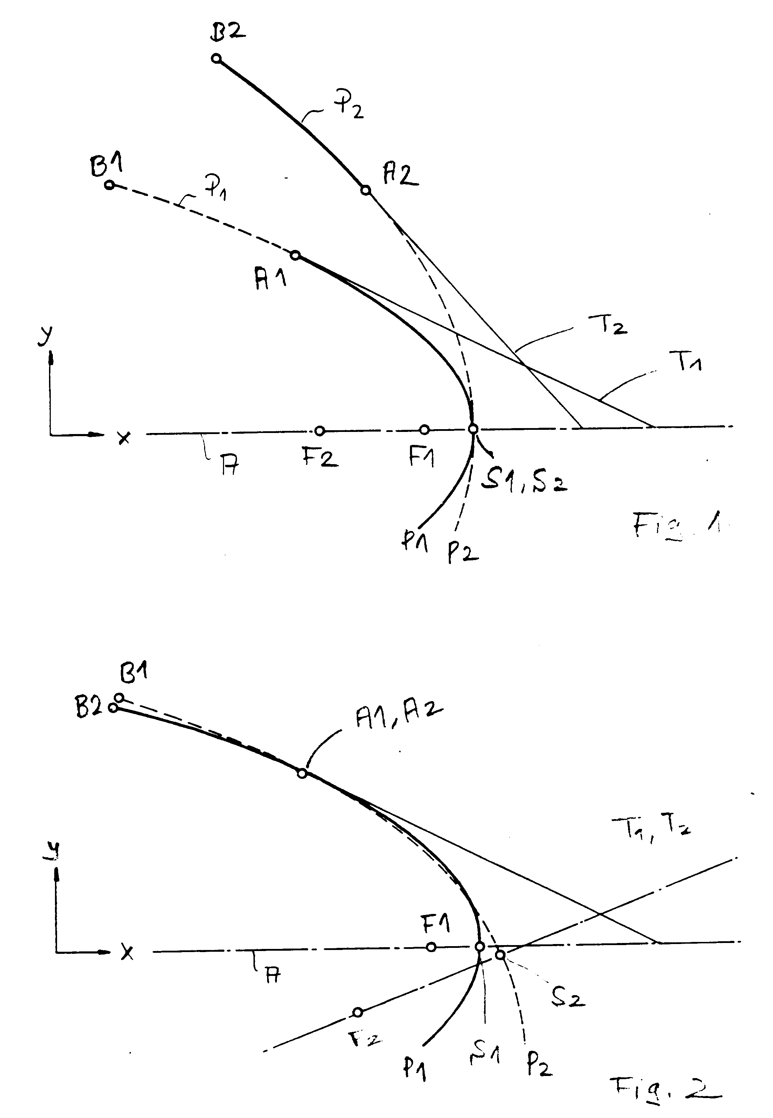

Fig.1 zeigt ein erstes Beispiel für die Konstruktion einer Reflektorform mittels eines Reflektorschnittkurve. Die Reflektorschnittkurve stellt einen Schnitt durch den Reflektor in einer Ebene dar, welche eine Achse A des Reflektors sowie eine Strahlungsquelle (nicht gezeigt) enthält. Die Strahlungsquelle ist in üblicher Weise in oder nahe einem Brennpunkt der Kegelschnitte angeordnet, welche die Reflektorschnittkurve erzeugen. In den Figuren sind verschiedene interessierende Punkte auf den gezeigten Kurven jeweils mit einem Buchstaben und einer Zahl bezeichnet. Die Zahl bedeutet jeweils die Zuordnung des Punktes zu einem bestimmten Kegelschnitt, während die Buchstaben der Unterscheidung verschiedener Punkte des Kegelschnittes dienen.

Fig.1 zeigt als Kegelschnitte zwei Parabeln P1, P2 sowie die zugehörigen Brennpunkte F1 bzw. F2. Die Scheitelpunkte S1, S2 der beiden Parabeln liegen gemeinsam auf der optischen Achse A.

Zunächst geht die Konstruktion der Reflektorform aus von der Parabel P1, die zweckmäßig für das zu lösende Beleuchtungsproblem ausgewählt worden ist, jedoch für sich genommen noch keine befriedigende Lichtverteilung erzeugt. Die von einer Reflektorform gemäß der Parabel P1 erzeugte Lichtverteilung zeigt an, daß besonders im äußeren Bereich (Randbereich) des Reflektors die Reflexionswinkel (entsprechend der Tangente) verändert werden sollten. Für diese Veränderung der Reflektorschnittkurve derart, daß sie außerhalb des Punktes A1 von der Parabel P1 abweicht, dient eine zweite Parabel P2. Es wird ein Punkt A1 auf der ersten Parabel P1 bestimmt, ab dem (vom Scheitel S1 aus gesehen) die Reflektorschnittkurve abgeändert werden soll. Das Stück A1 bis B2 der Parabel P1 soll also ersetzt werden durch ein anderes Kegelschnittsegment, nämlich das Segment A2 bis B2 der Parabel P2. Für diese Ersetzung werden zunächst die Tangenten T1 im Punkt A1 an der Parabel P1 und T2 im Punkt A2 an der Parabel P2 bestimmt. Die Tangenten T1, T2 schneiden die Achse A jeweils unter einem bestimmten Winkel. Zunächst werden die Tangenten in Parallellage gebracht. Hierzu wird das Segment A2-B2 der Parabel P2 um den Punkt A2 gedreht, bis die Tangente T2 parallel läuft zur Tangente T1. Sodann wird das Segment A2-B2 so parallel verschoben, daß der Punkt A2 mit dem Punkt A1 zusammenfällt. Dies ist in Fig.2 gezeigt. Die jeweils mit durchgezogener Linie dargestellten Segmente S1-A1 und A2-B2 liegen nun **direkt** aneinander, d.h. es gibt kein Übergangsstück zwischen den Kegelschnittsegmenten. Es entsteht eine Reflektorschnittkurve S1-A1/A2-B2 (in Fig.2 mit durchgezogener Linie dargestellt), die lückenlos aus Kegelschnittsegmenten von unterschiedlichen Kegelschnitten stammen und die stetig differenzierbar ineinander übergehen, d.h. an der Berührungsstelle A1, A2 sind die von beiden Richtungen her anlegbaren Tangenten gleich. Die Strahlungsverteilung eines gemäß der Reflektorschnittkurve von Fig.2 gebildeten Reflektors läßt sich vollständig bestimmen, da für jeden Punkt der Reflektoroberfläche die Tangente und somit Einfalls- und Ausfallswinkel eines Strahls bekannt sind.

Bei der in Fig.2 dargestellten Reflektorform kann vom Brennpunkt F1 abgestrahlte Strahlung im Randbereich des Reflektors (im Vergleich mit der Parabel P1) leicht nach innen reflektiert werden, während sie im zentralen Bereich parallel zur optischen Achse A reflektiert wird. Dadurch kann die Reflektorkurve S1-A1/A2-B2 einen kleineren Lichtfleck bilden als die Reflektorkurve S1-A1-B1. Es entsteht keine starke Inhomogenität (heller Ring) im Lichtfleck.

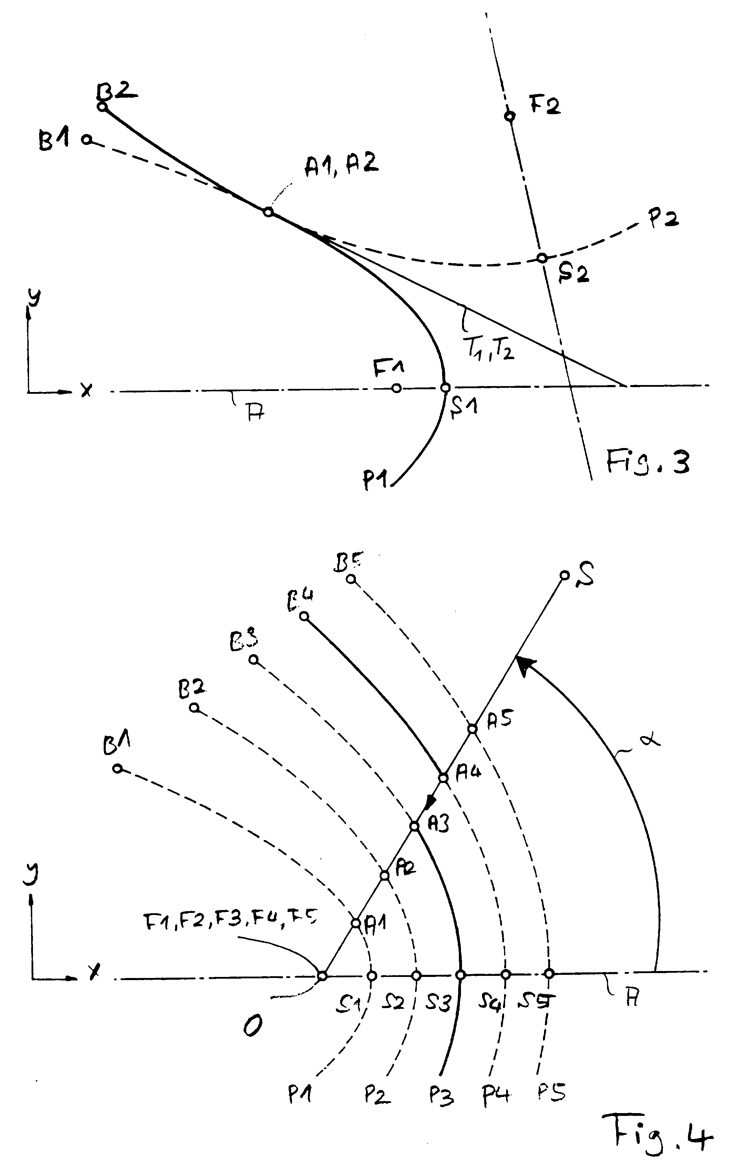

Fig.3 zeigt eine Abwandlung des Ausführungsbeispiels gemäß Fig.2, bei der an den Punkt A1 ein Parabelsegment A2-B2 angefügt wird, dessen Krümmungsrichtung (im Vergleich zum Beispiel gemäß Fig.2) umgekehrt ist. Der Verbindungspunkt A1-A2 ist ein Wendepunkt. Der durch die Reflektorschnittkurve S1-A1/A2-B2 gebildete Reflektor reflektiert im Randbereich einfallende Strahlung im Vergleich mit dem Beispiel gemäß Fig.2 mehr nach außen, so daß der Lichtfleck vergrößerst ist.

Auch bei diesem Beispiel können die Tangenten aller beteiligten Kegelschnittkurven rechnerisch festgestellt werden, so daß die Strahlungsverteilung vorab bestimmbar ist. Mit dem gezeigten Verfahren können unterschiedliche Kegelschnittsegmente von unterschiedlichen Kegelschnittarten direkt miteinander verbunden werden. Z.B. können Segmente von Parabeln mit Segmenten von Ellipsen verbunden werden.

Aus den derart gebildeten Reflektorschnittkurven lassen sich vollständige Reflektorformen z.B. durch Rotation um die Achse A bilden oder auch durch translatorische Verschiebung der Kurven senkrecht zur Papierebene (Rinnen-Reflektor).

Fig.4 illustriert ein Verfahren, mit dem Reflektorschnittkurven der oben beschriebenen Art besonders einfach erzeugbar sind. Hierzu sind mehrere Parabeln P1, P2, P3, P4 und P5 so gemäß Fig.4 in bezug auf eine gemeinsame Achse A angeordnet, daß ihre Brennpunkte F1, F2, F3, F4 bzw. F5 zusammenfallen. Dieser gemeinsame Brennpunkt ist gleichzeitig der Ursprung 0 eines Polarkoordinatensystems. Fig.4 zeigt einen Strahl 0-S, der vom 0-Punkt des Polarkoordinatensystems ausgeht. Der Polarwinkel ist mit α bezeichnet. Ordnet man die Parabeln in dieser Weise an, dann schneidet der Polarstrahl 0-S die Parabeln an Punkten A1, A2, A3, A4 und A5, wobei die in diesen Punkten an die Parabeln angelegten Tangenten alle parallel sind. Dies vereinfacht die Aneinanderfügung der Kegelschnittsegmente im Vergleich zum Ausführungsbeispiel gemäß den Fig.1 und 2, da keine Drehung des anzufügenden Segmentes durchgeführt zu werden braucht. Sollen z.B. die Parabelsegmente S3-A3 und A4-B4 direkt aneinandergefügt werden, dann braucht das Segment A4-B4 nur so parallelverschoben zu werden, daß der Punkt A4 auf dem Polarstrahl 0-S in den Punkt A3 überführt wird, was in Fig.4 durch einen Pfeil angedeutet ist. Am Berührungspunkt der unterschiedlichen Segmente der so gebildeten Reflektorschnittkurve, also an der Stelle A3/A4, sind die Tangenten identisch, wie gewünscht.

Eine wie vorstehend beschrieben gebildete Reflektorschnittkurve definiert durch Rotation um die Achse A einen Reflektor (oder durch Parallelverschiebung einen Rinnen-Reflektor), der sich von einem Paraboloid-Reflektor gemäß der Schnittkurve S3-A3-B3 dadurch unterscheidet, daß die Strahlung im Randbereich leicht nach außen reflektiert wird.

Soll hingegen umgekehrt die Strahlung im Randbereich des Reflektors mehr nach innen reflektiert werden, wird analog dem vorstehend beschriebenen Ausführungsbeispiel z.B. das Kurvensegment A1-B1 (oder auch bei geringerer Betonung der Reflexion nach innen, das Segment A2-B2) entlang dem Polarstrahl 0-S so verschoben, daß der Punkt A1 auf dem Punkt A3 zu liegen kommt.

Auf diese Weise können in einfacher Weise unterschiedlichste Reflektorformen erzeugt werden, deren Lichtverteilung exakt im voraus bestimmbar ist.

Das vorstehend anhand von Parabeln beschriebene Ausführungsbeispiel läßt sich auch analog auf Kreise, die ebenfalls Kegelschnitte sind, anwenden.

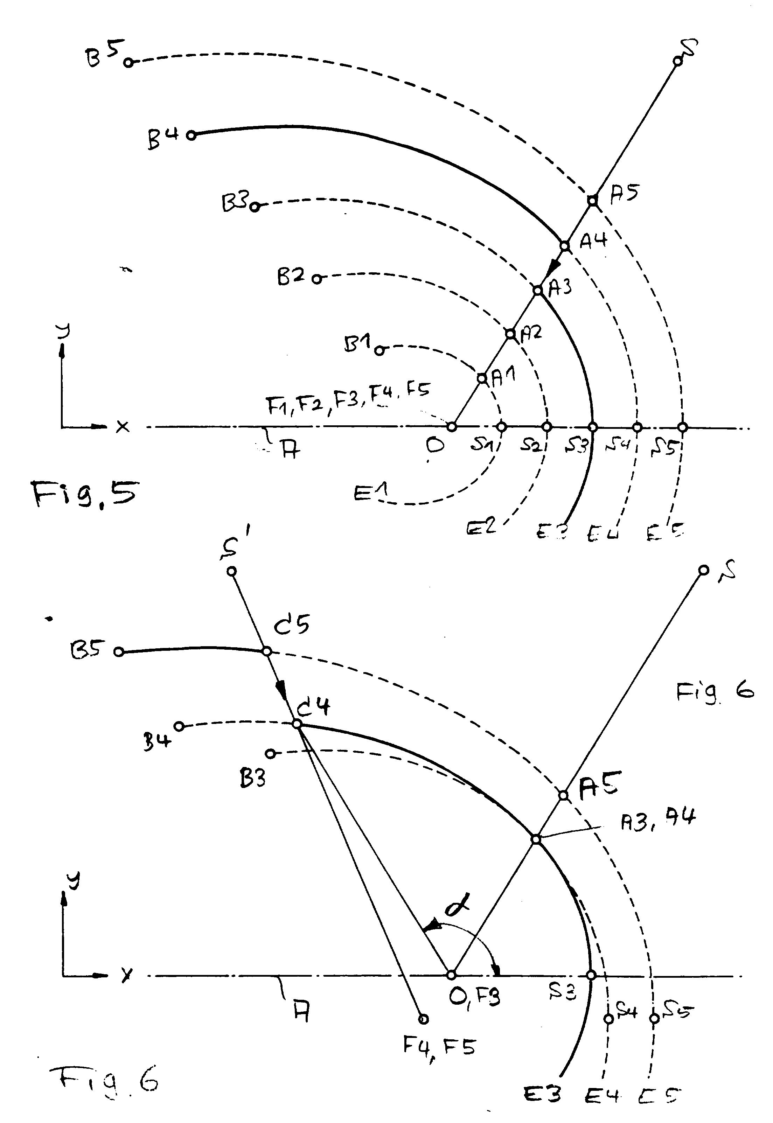

Fig.5 zeigt eine Anwendung des Konstruktionsprinzips bei Ellipsen als Ausgangs-Kegelschnitten.

Die Fig.5 zeigt Ellipsen E1, E2, E3, E4 und E5, die so in bezug auf eine gemeinsame Längsachse A angeordnet sind, daß ihre ersten Brennpunkte F1, F2, F3, F4 bzw. F5 im Ursprung 0 eines Polarkoordinatensystems zusammenfallen. Ein Polarstrahl 0-S schneidet die Ellipsen an Punkten A1 bis A5 so, daß die Tangenten in diesen Punkten wieder jeweils alle parallel zueinander sind. Somit ergibt sich eine weitere Konstruktion völlig analog zum anhand der Fig.4 beschriebenen Ausführungsbeispiel, wobei anstelle der Parabelsegmente nunmehr Ellipsensegmente treten. Bei den vorstehend beschriebenen Ausführungsbeispielen gemäß den Fig.4 und 5 wurden jeweils zwei Kegelschnittsegmente direkt aneinandergefügt.

Fig.6 zeigt ein Ausführungsbeispiel, bei dem eine Reflektorschnittkurve erzeugt wird, bei welcher mehr als zwei Kegelschnittsegmente direkt aneinandergefügt sind. Auch hier sind diejenigen Segmente, welche letztlich die zu erzeugende Reflektorschnittkurve bilden, mit durchgezogenen Linien dargestellt. Die Konstruktion der Reflektorschnittkurve vom Punkt S3 zu A3/A4 zu C4 entspricht derjenigen gemäß Fig.5. Ab dem Punkt C4 soll jedoch eine weitere Modifikation der Reflektorschnittkurve durch Anfügung eines weiteren Segmentes einer unterschiedlichen Ellipse, nämlich eines Segmentes C5-B5 der Ellipse E5 durchgeführt werden. Für eine direkte Anfügung des Segmentes C5-B5 an den Punkt C4 mit dem Ergebnis identischer Tangenten (stetige Differenzierbarkeit) wird wie folgt verfahren:

Zunächst wird bei der Erzeugung der Reflektorschnittkurve S3-A3/A4-C4 eine Parallelverschiebung entlang dem Strahl 0-S durchgeführt, so daß die Punkte A3 und A4 zusammenfallen (entsprechend dem Beispiel von Fig.5). Dabei werden auch die Brennpunkte F4, F5 der Ellipsen aus dem zuvor gemeinsamen Brennpunkt (entsprechend dem Ursprung 0 des Polarkoordinatensystems) unter die Achse A verschoben und zwar um den Abstand zwischen den Ellipsen E4 und E5 auf dem Strahl 0-S.

Auch die Ellipse E5 wird so verlegt, daß ihr Brennpunkt F5 auf dem Brennpunkt F4 liegt. Die Verschiebung erfolgt unter Beibehaltung der Parallelität der Achsen A. Sodann wird der Strahl S' gezogen, der nicht vom Ursprung 0 des Polarkoordinatensystems ausgeht, sondern den Punkt C4 mit dem Punkt F4, F5 gemäß Fig.6 verbindet. Der so gebildete Strahl S' schneidet die Ellipse E5 im Punkt C5. Nunmehr wird das Ellipsensegment C5-B5 so parallelverschoben, daß der Punkt C5 auf dem Strahl S' wandert, bis er auf dem Punkt C4 zu liegen kommt. Bei dieser Konstruktion ist die gebildete Reflektorschnittkurve kantenfrei, d.h. die Tangenten im Punkt C4/C5 sind identisch. Parallelverschiebung bedeutet hier, daß die Tangentenwinkel sich nicht ändern.

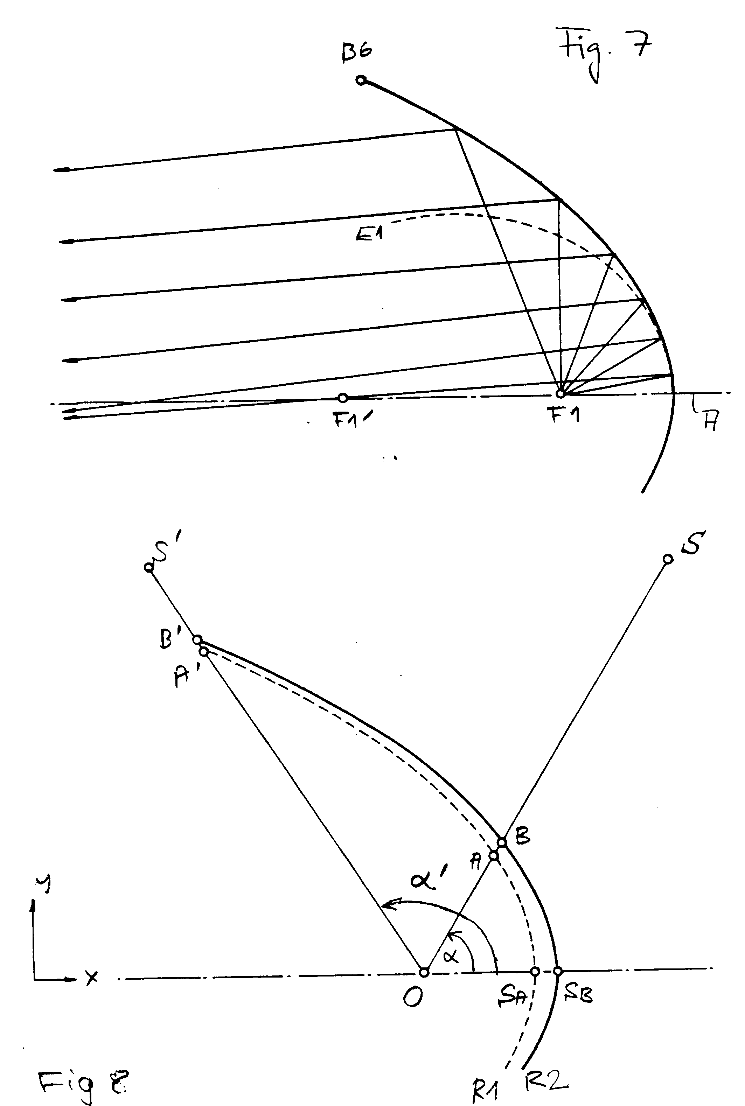

Fig.7 zeigt ein Ausführungsbeispiel, bei dem sechs Ellipsen verwendet werden, um sechs Segmente direkt kantenfrei aneinanderzufügen. Dabei ist das Parameterverhältnis b/a für alle verwendeten Ellipsen gleich, nämlich 0,87. Die Polarwinkelabstände, unter denen jeweils verschiedene Ellipsensegmente aneinandergefügt werden, betragen 20°. Die Kurvensegmente weisen mit zunehmenden Polarwinkel jeweils größere Parameter a und b auf (das Parameterverhältnis bleibt gleich, wie oben gesagt). Beim in Fig.4 gezeigten Ausführungsbeispiel wachsen die Parameter von innen nach außen (von der Achse A aus gesehen) gegenüber der ersten Ellipse der Reihenfolge nach jeweils um das 1,4-Fache, das 1,7-Fache, das 2,1-Fache, das 2,5-Fache und das 4,2-Fache. Fig.7 illustriert auch die mit einem solchen Reflektor erzeugte Strahlungsverteilung. Je näher die Strahlung am Rand (Punkt B6) des Reflektors reflektiert wird, um so weiter entfernt vom zweiten Brennpunkt F1' der ersten Ellipse E1 entfernt schneidet sie die optische Achse A. Durch diese Modifikation des Reflektors wird gegenüber einer reinen Ellipse eine homogenere Lichtverteilung erreicht.

Es können auch mehrere Kurvensegmente in Abwandlung des Ausführungsbeispiels gemäß Fig.7 und analog dem Beispiel gemäß Fig.3 so aneinander gereiht werden, daß sich die Krümmungsrichtung ändert, d.h. die Berührungsstellen zwischen den einzelnen Segmenten sind im Sinne der Differentialrechnung Wendepunkte.

Die vorstehend beschriebenen Ausführungsbeispiele zeigen, daß die erfindungsgemäße Reflektorschnittkurve gemäß nachfolgenden Schritten erzeugt wird:

a) Zunächst wird eine Kegelschnittkurve als Ausgangskurve ausgewählt. Dies ist z.B. die Kegelschnittkurve, welche das innere, achsnächste Segment bildet. Dieser Kegelschnitt wird nach allgemeinen Gesichtspunkten so bestimmt, daß unter den gegebenen Randbedingungen (Abmessungen, Abstände etc.) eine bestmögliche Annährung an die gewünschte Lichtverteilung gegeben ist.

b) Für eine Vielzahl von Punkten mit gewünscht feiner Inkrementierung (Raster) der Kurve werden die Tangenten bestimmt.

c) Für eine Vielzahl von Punkten werden Einfall- und Ausfallswinkel der Strahlung berechnet.

d) Die auf diese Weise rein rechnerisch erzeugte Strahlungsverteilung wird dargestellt in Abhängigkeit vom Polarwinkel. Ergibt die Strahlungsverteilung, daß ab einem bestimmten Polarwinkel eine Verbesserung erreicht werden soll, so wird an dem entsprechenden Polarwinkel in der Reflektorschnittkurve ein anderes Kegelschnittsegment angesetzt und erneut die Strahlungsverteilung ermittelt. Dies kann so häufig wiederholt werden, bis die gewünschte Strahlungsverteilung mit hinreichender Güte erreicht ist.

Die Erfindung eignet sich besonders zur Anwendung auf den Fall, bei dem eine relativ langgestreckte Lichtquelle auf der optischen Achse des Reflektors angeordnet ist und mittels einer (im Stand der Technik elliptischen) Reflektorform möglichst auf einen Punkt konzentriert werden soll. Aufgrund der geometrischen Abmessungen der Lichtquelle ist dies beim Stand der Technik mit einer einfachen Ellipse nur sehr unzureichend möglich. Mit der Erfindung können eine Vielzahl von Ellipsen-Segmenten direkt kantenfrei aneinandergereiht werden, wobei die Segmente mit zunehmenden Polarwinkel so gewählt werden, daß eine stärkere Reflexion nach innen erfolgt, d.h. die Kurvensegmente weisen mit zunehmenden Polarwinkel im Vergleich mit der achsnächsten Ausgangsellipse Tangenten auf, deren Winkel mit der Achse zunehmend kleiner wird.

Mit Hyperbel-Segmenten kann das gleiche Verfahren analog durchgeführt werden, wobei das Parameterverhältnis b/a ebenfalls konstant gehalten wird.

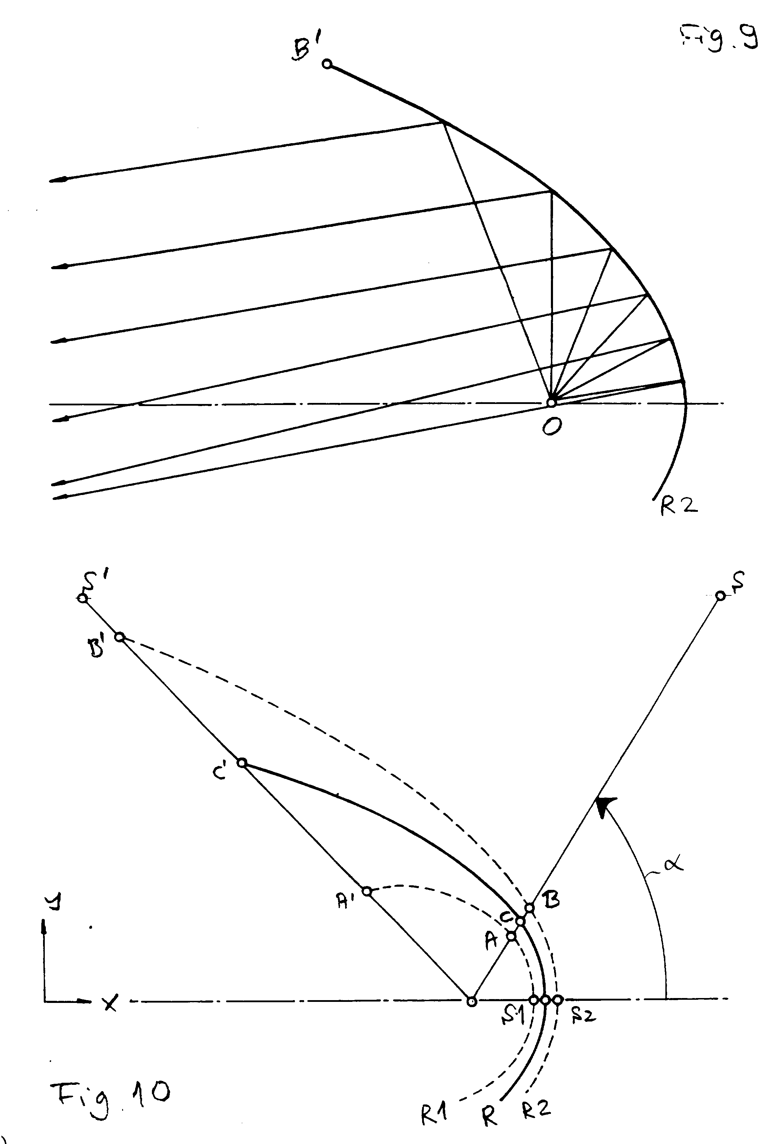

Das vorstehend erläuterte Verfahren zur Erzeugung von Reflektorformen läßt sich weiterentwickeln. Dies ist in Fig.8 erläutert. Die dort gezeigte Kurve R1 ist gemäß einer der Fig.1 bis 7 und der zugehörigen Beschreibung erzeugt, d.h. die Kurve R1 entspricht einer direkten Aneinanderreihung von Kegelschnittsegmenten. Diese Kurve R1 soll weiter modifiziert werden. Ein der Kurve R1 zugeordnetes Polarkoordinatensystem hat seinen Ursprung im Punkt 0. Der Polarstrahl 0-S schneidet die Kurve R1 im Punkt A unter dem Winkel α. Die neu zu bildende Reflektorschnittkurve R2 ist mit durchgezogener Linie dargestellt und wird durch ein sogenanntes Abstandsverhältnis k festgelegt. Dieses Abstandverhältnis k ist bereits in der oben genannten EP 0 402 740 A2 eingeführt und wird entsprechend auch auf die hier nachfolgend beschriebenen Ausführungsbeispiele angewandt. In Fig.8 wird das Abstandsverhältnis k wie folgt definiert.

$$k = 0\text{-}B/0\text{-}A$$

wobei 0-B der Abstand zwischen den Punkten 0 und B ist und
wobei 0-A der Abstand zwischenden Punkten 0 und A ist.

Die Kurve R2 ergibt sich dann dadurch, daß im Polarkoordinatensystem für jeden Punkt der Kurve R1 das Produkt aus dem Abstand 0-A mit dem Abstandsverhältnis k gebilet wird, um den entsprechenden Punkt der Kurve R2 zu erhalten. Beim Ausführungsbeispiel gemäß Fig.8 ist das Abstandsverhältnis k für jeden Punkt der Kurve größer als 1. Mit größer werdendem Polarwinkel ändert sich allerdings das Abstandsverhältnis k, es wird kleiner und nähert sich 1, wie der Kurve unmittelbar zu entnehmen ist. Somit kann das Abstandsverhältnis k als Funktion des Polarwinkels variiert werden. Solche Funktionen sind in der EP 0 402 740 A2, Sp.6, Z.51 - 54 angegeben und können hier ebenfalls angewandt werden.

Das Abstandsverhältnis k kann auch kleiner als 1 werden. Dabei würde dann in Abwandlung des Ausführungsbeispiels gemäß Fig.8 die äußere Kurve R2 unter die innere Kurve R1 laufen.

Eine so erzeugte Reflektorschnittkurve R2 entspricht keiner Kegelschnittkurve. Die Kurven lassen sich auch nicht in einer analytischen Form ausdrücken (keine Formel). Gleichwohl können Tangenten für jeden Punkt der Kurve R2 gebildet werden. Für die Kurve R1 sind nämlich Tangenten bekannt, wie oben dargestellt ist, weil es sich jeweils um Kegelschnittsegmente handelt. Andererseits ist auch das Abstandsverhältnis k als Funktion des Polarwinkels $\alpha$ bekannt. Somit kann, ausgehend von der Tangente an einem beliebigen Punkt A der Kurve R1, auch der Tangentenwinkel am auf dem Polarstrahl 0-S zugeordneten Punkt B der Reflektorschnittkurve R2 bestimmt werden. Es genügt hierfür, jeweils einen Differenzen-Quotienten zu bilden, der hinreichend nahe am untersuchten Punkt liegt, um eine gewünschte Annäherung an den exakten Differentialquotienten zu erreichen.

Fig.9 zeigt die Strahlungsverteilung eines Reflektors, der durch Rotation um die Achse A mittels der Reflektorschnittkurve R2 erzeugt ist. Ein Vergleich mit Fig.7 ergibt, daß die Lichtverteilung auf einem senkrecht zur Achse A stehenden, unter Abstand angeordneten Schirm breiter ist.

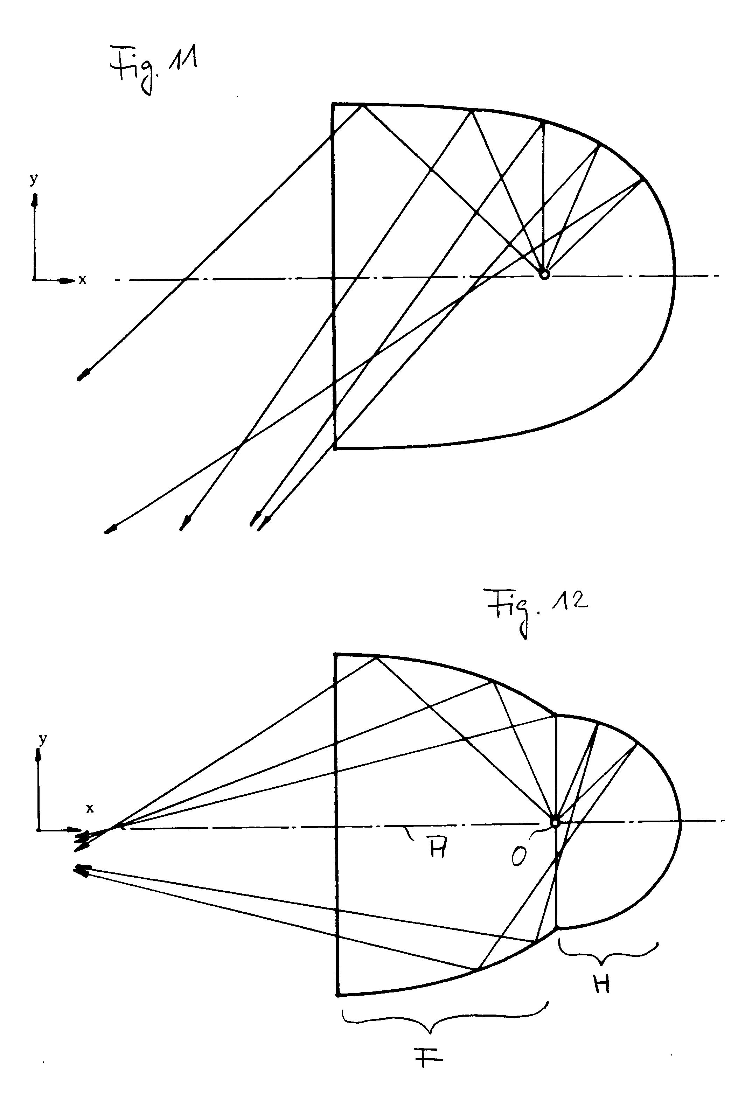

Fig.10 zeigt eine Abwandlung des Ausführungsbeispiels gemäß Fig.8. Eine der oder beide Kurven R1 und R2 gemäß Fig.10 sind durch ein Verfahren gemäß den Fig.1 bis 7 und der zugehörigen Beschreibung gebildet. Falls nur eine der beiden Kurven so erzeugt ist, kann es sich bei der anderen Kurve um einen herkömlichen Kegelschnitt handeln. Der Schnittpunkt C der neu zu erzeugenden Reflektorschnittkurve R wird durch ein Abstandsverhältnis k festgelegt. Das Abstandsverhältnis k wird wie folgt definiert:

$$k = I/L$$

wobei I der Abstand zwischen den Punkten A und C oder C und B ist, während L der Abstand zwischen den Punkte A und B ist.

Wenn k = 1 gewählt wird, fällt die Reflektorkurve R mit der nebenliegenden Kurve und bei k = 0 mit der anderen nebenliegenden Kurve zusammen. Üblicherweise liegt k zwischen 0 und 1, es kann aber auch > 1 und < 0 werden.

Weiterhin kann das Abstandsverhältnis als Funktion des Polarwinkels $\alpha$ variieren oder konstant sein.

Beim Ausführungsbeispiel gemäß Fig.10 ist k konstant gewählt, die Kurve R2 ist eine Parabel und die Kurve R1 ist eine Zusammenfügung von mehreren Ellipsensegmenten, deren Tangentenwinkel mit größer werdendem Polarwinkel immer kleiner werden im Vergleich zur achsnahen Ausgangsellipse. Mit dieser Reflektorform kann eine absolut homogene Lichtverteilung erzeugt werden.

Fig.11 zeigt ein anderes Ausführungsbeispiel einer erfindungsgemäß erzeugten Reflektorform. Der Reflektor hat eine glockenähnliche Gestalt. Diese Form ermöglicht eine sogenannte "batwing"(flügelförmige)-Lichtverteilung, wobei die sogenannte Direktblendung weitgehend reduziert ist. Eine solche Reflektorform kann besonders bei einer Verkaufsraumbeleuchtung Anwendung finden. Bei der Beleuchtung von Verkaufsräumen ist es wichtig, eine hinreichende vertikale Lichtverteilung zu erzeugen, dies gilt insbesondere für Bekleidungsgeschäfte, bei denen eine horizontale Lichtverteilung unerwünscht ist. Weiterhin soll ein Reflektor für diesen Einsatzzweck relativ lang sein, um eine Direktblendung durch die Lichtquelle zu vermeiden.

Mit dem Stand der Technik ist es schwierig, diese beiden Anforderungen gleichzeitig zu erfüllen, da ein langer ellipsenförmiger Reflektor keine flügelförmige, sondern eine torpedoförmige Lichtverteilung erzeugt.

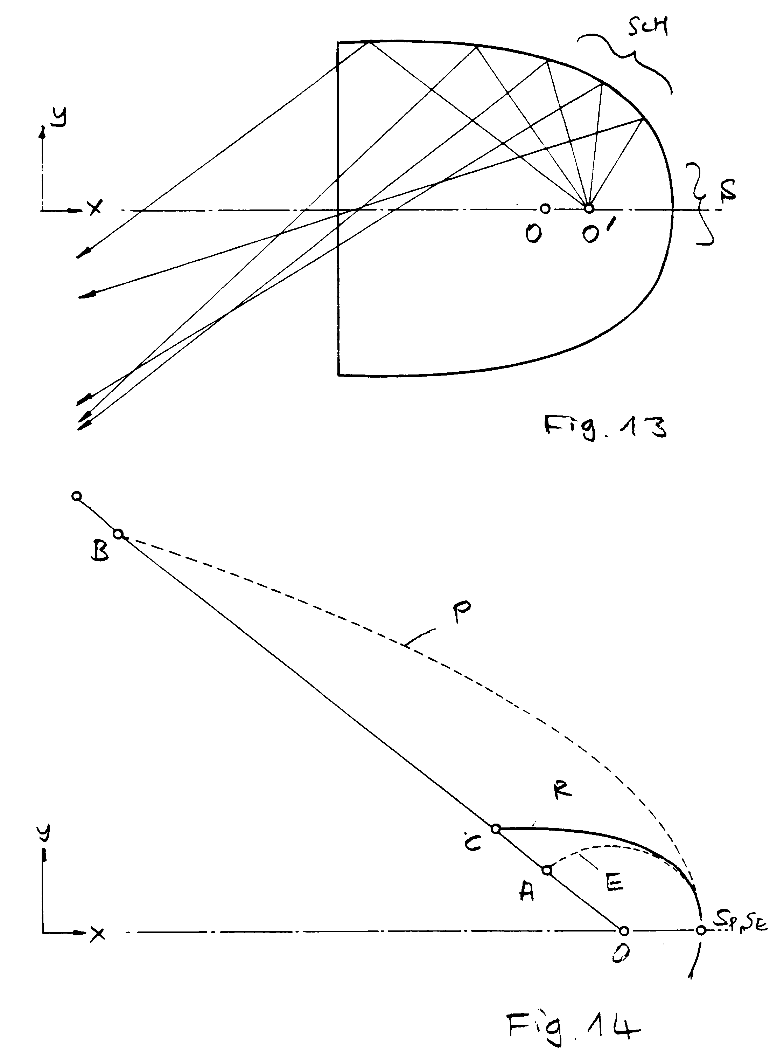

Im Stand der Technik werden deshalb unterschiedliche Kurven miteinander verbunden, wie in Fig.12 gezeigt ist. Für die Frontseite F des Reflektors wird eine Ellipse verwendet. Die Lichtquelle ist mit 0 bezeichnet. Im hinteren Bereich H des Reflektors wird ein kreisabschnittförmiger Reflektor verwendet oder eine Ellipse, die nahezu kreisförmig ist. Hierdurch wird die Strahlung von der Lichtquelle in diesem Bereich zur Frontseite F reflektiert und dann mit einem größeren Ausfallwinkel nach außen weiterreflektiert.

Bei dieser Lösung werden zwei Kurven kantig miteinander verbunden, so daß ein dunkler Ring im Lichtfleck entsteht. Da etwa eine Hälfte der Strahlen zweimal reflektiert wird, ist ein Verlust unvermeidlich. Außerdem kann dieser Reflektor keine breite, flügelförmige Lichtverteilung erzeugen. Um den dunklen Ring verschwinden zu lassen und um eine breitere Lichtverteilung zu erreichen, wird die Reflexionsoberfläche grob bearbeitet, wie durch Hammerschlag oder Sandstrahlung. Dadurch nimmt aber der Strahlungsverlust deutlich zu. Das Streulicht kann eine Direktblendung beim Beobachter erzeugen.

Die erfindungsgemäß erzeugte glockenförmige Reflektorgestalt gemäß Fig.11 bewirkt demgegenüber eine einzige Strahlungsreflexion und erzeugt eine sehr breite Lichtverteilung. Es entsteht kein dunkler Ring im Lichtfleck, da die Kurve kantenfrei ist.

Ein weiterer Vorteil besteht darin, daß sich bei der erfindungsgemäßen glockenförmigen Reflektorform eine einfache Veränderung der Lichtverteilung erreichen läßt durch Verschieben der Lichtquelle auf der Achse. Dabei ist die Lichtverteilung immer flügelförmig (vgl. Punkte 0 und 0' gemäß Fig.13). Wesentlich ist, daß bei diesem Reflektor der Schulterbereich (Fig.13, SCH) die Strahlung am breitesten und sehr intensiv reflektiert (vgl. Fig.11). Da der Schulterbereich nur eine geringe Distanz von der Lichtquelle 0 hat, kann durch eine geringfügige Verschiebung 0-0' auf der Achse der Einfallswinkel stark geändert werden (vgl. Fig.13). Dabei erzeugt aber der Schulterbereich trotz der Verschiebung der Lichtquelle immer eine breite und intensive Strahlung, so daß die Lichtverteilung insgesamt flügelförmig bleibt.

Ein weiterer Vorteil dieses Reflektors besteht darin, daß eine Direktblendung für einen von der Leuchte weit entfernten Beobachter trotz des großen Ausstrahlungswinkels nicht auftritt, weil die Strahlung mit dem größten Ausfallwinkel (in bezug auf die optische Achse) vom Schulterbereich her reflektiert wird, also indirekt ist.

Wird dieser Reflektor relativ groß gestaltet, kann der Scheitelbereich mit einer groben Oberfläche versehen werden, um eine zu große Lichtintensität in der Mitte des Lichtfleckes zu vermeiden.

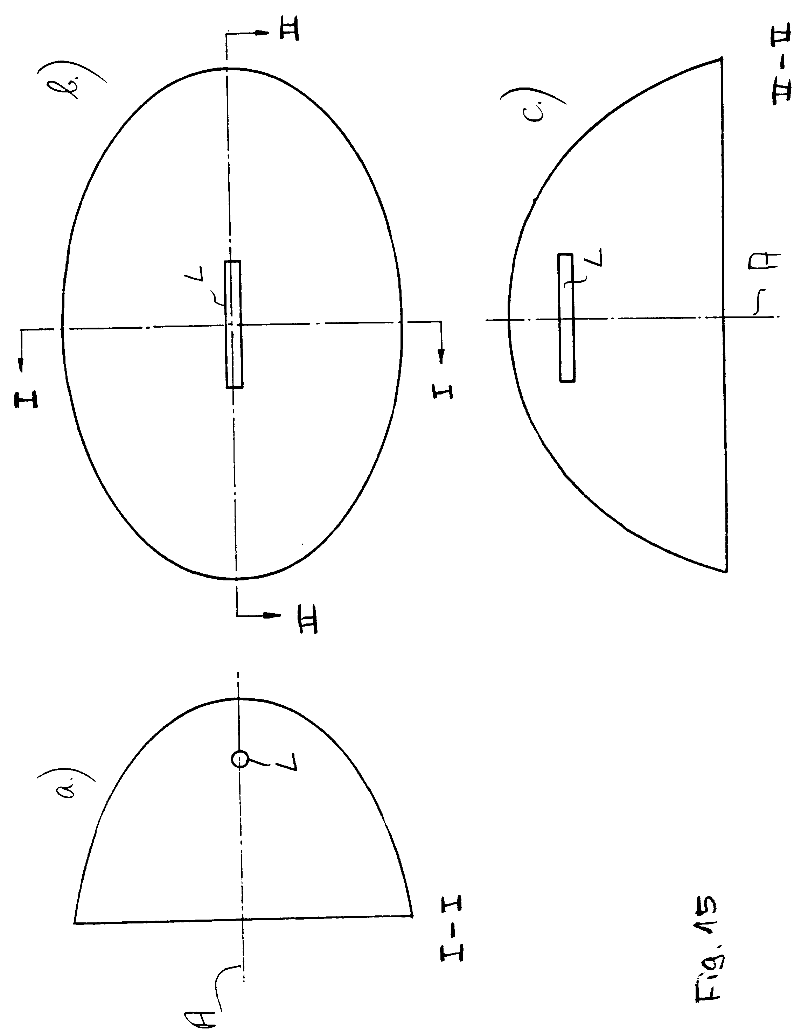

Eine derartige glockenförmige Kurve kann mit dem erfindungsgemäßen Verfahren hergestellt werden, wenn die Parameter der Kurven wie folgt festgelegt werden, vgl. Fig.14:

- Zunächst werden eine Parabel und eine Ellipse ausgewählt. Dabei soll die Ellipse so große Parameter haben, daß ihre Kurve im Scheitelbereich S zumindest annähernd so steil ist wie die Kurve der Parabel. Der Einfachheit halber können die beiden Scheitel zusammenfallen. Das Abstandsverhältnis k ist konstant und wird ziemlich klein gewählt, wenn l = A - c definiert ist.

- Nach einem kurzen Stück mit steiler Steigung wird die Kurve der ersten Ellipse fortgeführt durch ein Kurvensegment einer anderen Ellipse, die wesentlich kleinere Parameter aufweist. Dieses weitere Kurvensegment verläuft nur über ein relativ kurzes Stück, z.B. 2 bis 10° im Polarkoordinatensystem.

- Sodann wird ein weiteres Ellipsensegment angesetzt, wobei die Parameter dieser Ellipse mittlere Werte sind.

- Nach dem Schulterbereich werden die Parameter der für die Kurvensegmente herangezogenen Ellipsen und Parabeln so ausgewählt, daß die Tangenten mit zunehmenden Polarwinkel des Reflektors allmählich parallel zur Achse laufen.

Die in erfindungsgemäßer Weise hergestellten Reflektorschnittkurven können sowohl für rotationssymmetrische Reflektoren als auch für rinnenförmige Reflektoren verwendet werden.

Weiterhin kann die Erfindung auch eingesetzt werden bei Reflektoren, die nicht rotationssymmetrisch oder rinnenförmig sind, wie in Fig.15 dargestellt ist. Fig.15 zeigt ein Beispiel eines solchen Reflektors, bei dem der Querschnitt senkrecht zur optischen Achse A oval ist. Fig.15a zeigt einen Vertikalschnitt entlang der Linie I-I von Fig.15b, welche eine Draufsicht auf den Reflektor (aus der Beleuchtungsrichtung) zeigt. Fig.15c zeigt einen Schnitt entlang der Linie II-II von Fig.15b. Ein solcher Reflektor eignet sich besonders für den Einsatz einer langgestreckten Lichtquelle L. Wie den Fig.15a - c zu entnehmen ist, steht die Längsachse der Lichtquelle L senkrecht zur optischen Achse A des Reflektors. Trotz dieser langgestreckten Form der Lichtquelle kann mit dem Reflektor ein etwa kreisförmiger Lichtfleck erzeugt werden, da die Strahlen, welche von den Enden der Lichtquelle ausgehen, wegen des ovalen Querschnittes zum größten Teil nach innen reflektiert werden.

Ein solcher Reflektor kann erfindungsgemäß so gebildet werden, daß die Schnittkurven gemäß den Fig.15a und 15c erfindungsgemäß (siehe oben) gebildet werden. Die Reflektorschnittkurven in Ebenen senkrecht zur optischen Achse (Fig.15b) werden so festgelegt, daß sie ellipsenförmig sind, wobei die Parameter (große und kleine Achse) den entsprechenden Abmessungen von Fig.15a bzw. 15c entsprechen.

In Abwandlung des vorstehend beschriebenen Ausführungsbeispiels kann ein Reflektor entsprechend Fig.15 auch so erzeugt werden, daß diejenigen Reflektorschnittkurven, die in Ebenen liegen, welche die optische Achse enthalten (also gemäß Fig.15a und 15c) wiederum erfindungsgemäß gebildet sind, während diejenigen Reflektorschnittkurven, welche in Ebenen senkrecht zur optischen Achse liegen (Fig.15b) mittels Ellipsen festgelegt werden, deren Parameter frei gewählt werden.

**Patentansprüche**

1. Reflektor für von einer Strahlungsquelle ausgehende Strahlung mit einer Form derart,

daß eine Reflektorschnittkurve in einer eine Achse (A) des Reflektors und die Strahlungsquelle enthaltenden Ebene Segmente (S1-A1, A2-B2) verschiedener gekrümmter Kegelschnitte aufweist, die kantenfrei ineinander übergehen,
wobei die Kegelschnittsegmente (S1-A1, A2-B2) direkt aneinandergefügt sind, dadurch **gekennzeichnet,** daß im Berührungspunkt (A1, A2) zweier aneinandergefügter Kegelschnittsegmente (S1-A1, A2-B2) die an beide Kegelschnittsegmente anlegbaren Tangenten (T1, T2) gleich sind und daß die ersten Brennpunkte (F1, F2) der Kegelschnittsegmente (S1-A1, A2-B2) auseinanderfallen.

2. Reflektor nach Anspruch 1, dadurch **gekennzeichnet,** daß die verschiedenen Kegelschnitte von gleicher Kegelschnittart sind.

3. Reflektor nach Anspruch 1, dadurch **gekennzeichnet**, daß die verschiedenen Kegelschnitte von verschiedener Kegelschnittart sind.

4. Reflektor nach Anspruch 1, dadurch **gekennzeichnet**, daß zumindest zwei Segmente der Reflektorschnittkurve parabolisch sind und die Brennpunkte und die Abszissenachsen (A) der zugehörigen Parabeln zusammenfallen, wobei die Aneinanderfügung zweier Segmente (S1-A1, A2-B2) derart ist, daß die durch die Berührungspunkte (A3, A4) der Segmente (S3-A3, A4-B4) und deren Abszissenachsen (A) gebildeten Winkel ($\alpha$) gleich sind und daß eines der Segmente mit seinem Endpunkt (A4) entlang einem diesem Polarwinkel ($\alpha$) entsprechenden Polarstrahl (S) drehungsfrei verschoben wird bis sein Endpunkt (A4) mit einem Endpunkt (A3) des anderen Segmentes (S3-A3) zusammenfällt.

5. Reflektor nach einem der vorhergehenden Ansprüche, dadurch **gekennzeichnet**, daß die Reflektorschnittkurve aus mehr als zwei Segmenten unterschiedlicher Kegelschnitte zusammengefügt ist.

6. Reflektor nach Anspruch 1, dadurch **gekennzeichnet** daß die Kegelschnitte elliptisch sind, wobei das Achsenverhältnis (a/b) der Ellipsen konstant ist.

7. Reflektor nach einem der Ansprüche 5 oder 6, dadurch **gekennzeichnet**, daß die Kegelschnitte mit zunehmenden Polarwinkel größer werdende Parameter haben.

8. Reflektor nach Anspruch 5, dadurch **gekennzeichnet**, daß die an die Reflektorschnittkurve anlegbaren Tangenten mit zunehmendem Polarwinkel ($\alpha$) einen kleineren Winkel mit der Achse (A) des Reflektors bilden als diejenigen Tangenten, die an den Kegelschnitt des ersten, achsnächsten Segmentes anlegbar sind.

9. Reflektor für von einer Strahlungsquelle ausgehende Strahlung mit einer Form derart, daß eine Reflektorschnittkurve (R2 in Fig. 8; R in Fig. 10) in einer eine Achse (x) des Reflektors und die Strahlungsquelle enthaltenden Ebene gebildet ist durch Multiplikation einer Reflektorschnittkurve (R1 in Fig. 8; R1, R2 in Fig. 10) eines Reflektors nach einem der Ansprüche 1 bis 8 mit einem Abstandsverhältnis (k), wobei das Abstandsverhältnis (k) entweder (Fig. 8) definiert ist als das Verhältnis (O-B/O-A)

des Abstands (O-B) zwischen
dem Ursprung (O) eines Polarstrahls und
dessen Schnittpunkt (B in Fig. 8) mit der erstgenannten Reflektorschnittkurve (R2 in Fig. 8)
zu dem Abstand (O-A) zwischen
dem Ursprung (O) des Polarstrahls und
dessen Schnittpunkt (A in Fig. 8) mit der zweitgenannten Reflektorschnittkurve (R1 in Fig. 8)
oder (Fig. 10) definiert ist als das Verhältnis (I/L)
des Abstands (1) zwischen
dem Schnittpunkt (C in Fig. 10) eines Polarstrahls mit der erstgenannten Reflektorschnittkurve (R in Fig. 10) und
dem Schnittpunkt (A oder B in Fig. 10) des Polarstrahls mit der zweitgenannten Reflektorschnittkurve oder einer weiteren Kurve (R1 oder R2 in Fig. 10)
zu dem Abstand (L) zwischen
den Schnittpunkten (A und B in Fig. 10) des Polarstrahls mit der zweitgenannten Reflektorschnittkurve und der weiteren Kurve (R1 und R2 in Fig. 10).

10. Verfahren zum Erzeugen einer Reflektorform, deren Schnittkurve in einer eine Achse (A) des Reflektors enthaltenden Ebene Segmente (S1-A1, A2-B2) verschiedener gekrümmter Kegelschnitte aufweist, die kantenfrei ineinander übergehen, dadurch **gekennzeichnet**, daß die Kegelschnittsegmente (S1-A1, A2-B2) direkt derart aneinandergefügt werden, daß in ihrem Berührungspunkt (A1, A2) die an beide Kegelschnittsegmente anlegbaren Tangenten (T1, T2) zusammenfallen, und daß die ersten Brennpunkte (F1, F2) der Kegelschnittsegmente (S1-A1, A2-B2) auseinanderfallen.

11. Verfahren nach Anspruch 10, dadurch **gekennzeichnet**, daß die Aneinanderfügung der Kegelschnittsegmente durch Parallelverschiebung eines Segmentes einlang einem Polarstrahl (S) erfolgt (Fig.4, 5).

**12.** Verfahren nach Anspruch 10,
dadurch **gekennzeichnet**, daß die Aneinanderfügung der Kegelschnittsegmente durch Drehung eines Segmentes bis zur Parallelität einer Tangente (T2) an einem seiner Endpunkte (A2) mit einer Tangente (T1) an einem Endpunkt (A1) des anderen Segmentes und Verschiebung eines der genannten Endpunkte erfolgt (Fig.1, 2).

**13.** Verfahren zum Erzeugen einer Reflektorform,
dadurch **gekennzeichnet**, daß eine Ausgangsschnittkurve aus Kegelnschnittsegmenten gemäß einem der Ansprüche 10 bis 12 gebildet wird und daß diese Ausgangsschnittkurve mit einem Abstandsfaktor (k) gestreckt und/oder gestaucht wird, um eine Schnittkurve in einer eine Achse des Reflektors enthaltenden Ebene zu erhalten.

**14.** Reflektor nach einem der Ansprüche 1 bis 9 für eine flügelförmige Strahlungsverteilung,
dadurch **gekennzeichnet**, daß der Reflektor eine Glockenform aufweist.

**15.** Reflektor nach einem der Ansprüche 1 bis 9 oder nach Anspruch 14 mit einer gegenüber der optischen Achse quer angeordneten relativ langen Strahlenquelle zum Erzeugen eines kreisförmigen Lichtfleckes,
dadurch **gekennzeichnet**, daß der die optische Achse schneidende Querschnitt des Reflektors oval ist.

**Claims**

**1.** A reflector for radiation which emanates from a radiation source, having such configuration that a reflector intersection curve in a plane containing an axis (A) of the reflector as well as the radiation source comprises segments (S1-A1, A2-B2) of various curved conic sections merging without edges, the conic segments (S1-A1, A2-B2) being joined directly to each other, **characterized** in that, at the point of contact (A1, A2) of two joined conic segments (S1-A1, A2-B2), the tangents (T1, T2) which can be put to the two conic segments are the same, and that the first foci (F1, F2) of the conic segments (S1-A1, A2-B2) diverge.

**2.** The reflector as claimed in claim 1, characterized in that the various conics are of the same type of conic section.

**3.** The reflector as claimed in claim 1, characterized in that the various conics are of different types of conic section.

**4.** The reflector as claimed in claim 1, characterized in that at least two segments of the reflector inersection curve are parabolic and the foci and the X-axes (A) of the corresponding parabolas coincide, the joining of two segments (S1-A1, A2-B2) being such that the angles ($\alpha$) defined by the points of contact (A3, A4) of the segments (S3-A3, A4-B4) and their X-axes (A) are the same, and that one of the segments is moved, without rotation, with its end point (A4) along a polar ray (S) corresponding to this polar angle ($\alpha$) until this end point (A4) coincides with an end point (A3) of the other segment (S3-A3).

**5.** The reflector as claimed in any one of the preceding claims, characterized in that the reflector intersection curve is composed of more than two segments of different conic sections.

**6.** The reflector as claimed in claim 1, characterized in that the conic sections are elliptical, the axial ratio (a/b) of the ellipses being constant.

**7.** The reflector as claimed in claim 5 or 6, characterized in that the conic sections have increasing parameters as the polar angle increases.

**8.** The reflector as claimed in claim 5, characterized in that, as the polar angle ($\alpha$) increases, the tangents which can be put to the reflector intersection curve enclose a smaller angle with the axis (A) of the reflector than those tangents which can be put to the conic of the first segment which is closest to the axis.

**9.** A reflector for radiation which emanates from a radiation source, having such configuration that a reflector intersection curve (R2 in fig. 8; R in fig. 10) in a plane containing an axis (x) of the reflector as well as the radiation source is formed by multiplication of a reflector intersection curve (R1 in fig. 8; R1, R2 in Fig. 10) of a reflector, as claimed in any one of claims 1 to 8, with a distance ratio (k), the distance ratio (k) either (fig. 8) being defined as the ratio (O-B/O-A) of the distance (O-B)
between the origin (O) of a polar ray and its point of intersection (B in fig. 8) with the reflector intersection curve first mentioned (R2 in fig. 8) and the distance (O-A)
between the origin (O) of the polar ray and its point of intersection (A in fig. 8) with the reflector intersection curve mentioned secondly (R1 in fig. 8), or (fig. 10) being defined as the ratio (l/L) of the distance (l)
between the point of intersection (C in fig. 10) of a polar ray with the reflector intersection curve first mentioned (R in fig. 10)
and the point of intersection (A or B in fig. 10) of the polar ray with the reflector intersection curve mentioned secondly or another curve (R1 or R2 in fig. 10)

and the distance (L)

between the points of intersection (A and B in fig. 10) of the polar ray with the reflector intersection curve mentioned secondly and the other curve (R1 and R2 in fig. 10).

10. A method of producing a reflector configuration whose intersection curve in a plane containing an axis (A) of the reflector comprises segments (S1-A1, A2-B2) of various, curved conic sections merging without edges, **characterized** in that the conic segments (S1-A1, A2-B2) are joined directly to each other such that, at their point of contact (A1, A2), the tangents (T1, T2) which can be put to the two conic segments coincide, and in that the first foci (F1, F2) of the conic segments (S1-A1, A2-B2) diverge.

11. The method as claimed in claim 10, characterized in that the joining of the conic segments is effected by translatory movement of one segment along a polar ray (S) (figs. 4, 5).

12. The method as claimed in claim 10, characterized in that the joining of the conic segments is effected by rotating one segment until a tangent (T2) to one of its end points (A2) becomes parallel to a tangent (T1) to an end point (A1) of the other segment, and dispacing one of the end points mentioned (figs. 1, 2).

13. A method of producing a reflector configuration, **characterized** in that a starting intersection curve is made of conic segments as defined in any one of claims 10 to 12, and in that this starting intersection curve is extended and/or compressed by a distance factor (k) so as to obtain an intersection curve in a plane which contains an axis of the reflector.

14. The reflector as claimed in any one of claims 1 to 9 for wing-shaped distribution of radiation, **characterized** in that the reflector has the shape of a bell.

15. The reflector as claimed in any one of claims 1 to 9 or claim 14, comprising a relatively long radiation source, disposed transversely of the optical axis, to generate a circular light spot, **characterized** in that the cross section of the reflector which intersects the optical axis is oval.

## Revendications

1. Réflecteur pour un rayonnement partant d'une source de rayonnement, présentant une forme telle

qu'une courbe de coupe du réflecteur dans un plan contenant un axe (A) du réflecteur et la source de rayonnement présente des segments (S1-A1, A2-B2) de coupes coniques de différentes courbures, qui se transforment l'un dans l'autre sans brisure, les segments de coupes coniques (S1-A1, A2-B2) étant directement aboutés l'un à l'autre, caractérisé par le fait qu'au point de contact (A1, A2) de deux segments de coupes coniques (S1-A1, A2-B2) aboutés l'un à l'autre, les tangentes (T1, T2) aux deux segments de coupes coniques sont identiques et que les premiers foyers (F1, F2) des segments de coupes coniques (S1-A1, A2-B2) ne coïncident pas.

2. Réflecteur selon la revendication 1, caractérisé par le fait que les différentes coupes coniques sont du même type de section conique.

3. Réflecteur selon la revendication 1, caractérisé par le fait que les différentes coupes coniques sont de type de section conique différents.

4. Réflecteur selon la revendication 1, caractérisé par le fait qu'au moins deux segments de la courbe de coupes coniques sont paraboliques et que les foyers et les axes des abscisses (A) des paraboles correspondantes coïncident, l'aboutement de deux segments (S1-A1, A2-B2) étant tel que les angles ($\alpha$) formé par les points de contact (A3, A4) des segments (S3-A3, A4-B4) et de leur axe des abscisses (A) sont égaux et que l'un des segments est translaté, sans rotation, par son point d'extrémité (A4), le long d'un rayon polaire (S) correspondant à cet angle polaire ($\alpha$), jusqu'à ce que son point d'extrémité (A4) coïncide avec un point d'extrémité (A3) de l'autre segment (S3-A3).

5. Réflecteur selon la revendication précédente, caractérisé par le fait que la courbe de coupe du réflecteur est assemblée par aboutement de plus de deux segments de coupes coniques différentes.

6. Réflecteur selon la revendication 1, caractérisé par le fait que les coupes coniques sont elliptiques, le rapport des axes (a/b) des ellipses étant constant.

7. Réflecteur selon l'une des revendications 5 ou 6, caractérisé par le fait que les coupes coniques ont des paramètres qui croissent avec un angle polaire croissant.

8. Réflecteur selon la revendication 5, caractérisé par le fait que les tangentes à la courbe de coupe du réflecteur font, avec l'axe (A) du réflecteur, pour un angle polaire (α) croissant, un angle plus petit que celui des tangentes à la coupe conique du premier segment, le plus proche de l'axe.

9. Réflecteur pour un rayonnement partant d'une source de rayonnement, présentant une forme telle qu'une courbe de coupe du réflecteur (R2 sur la figure 8; R sur la figure 10) est formé, dans un plan contenant un axe (x) du réflecteur et la source de rayonnement, par multiplication d'une courbe de coupe (R1 sur la figure 8; R1, R2 sur la figure 10) d'un réflecteur conforme à l'une des revendications 1 à 8 et présentant un rapport de distances (k), étant précisé que le rapport de distances (k)

soit (figure 8) est défini comme le rapport (O-B/O-A) entre

l'origine (O-B) d'un rayon polaire

et

son point d'intersection (B) sur la figure 8 avec la courbe de coupe du réflecteur nommée en premier lieu (R2 sur la figure 8)

et la distance (O-A) entre

l'origine (O) du rayon polaire

et

son point d'intersection (A sur la figure 8) avec la courbe de coupe du réflecteur nommée en second lieu (R1 sur la figure 8)

soit (figure (10) est défini comme le rapport (I/L)

entre la distance (I) entre

le point d'intersection (C sur la figure 10) d'un rayon polaire avec la courbe de coupe du réflecteur nommée en premier lieu (R sur la figure 10)

et le point d'intersection (A ou B sur la figure 10) du rayon polaire avec la courbe de coupe du réflecteur nommée en second lieu ou avec une autre courbe (R1 ou R2 sur la figure 10).

et la distance (L) entre

les points d'intersection (A et B sur la figure 10) du rayon avec la courbe de coupe du réflecteur nommée en second lieu et avec l'autre courbe (R1 et R2 sur la figure 10).

10. Procédé de génération d'une forme de réflecteur dont la courbe de coupe présente, dans un plan contenant un axe (A) du réflecteur, des segments (S1-A1, A2-B2) de coupes coniques de différentes courbures, qui se transforment l'une dans l'autre sans brisure,

caractérisé par le fait que l'on aboute directement l'un à l'autre les segments de coupes coniques (S1-A1, A2-B2) de façon qu'à leur point de contact (A1, A2) les tangentes (T1, T2) aux deux segments de coupes coniques coïncident, et que les premiers foyers F1, F2) des segments de coupes coniques (S1-A1, A2-B2) ne coïncident pas.

11. Procédé selon la revendication 10, caractérisé par le fait que l'aboutement, l'un à l'autre, des segments de coupes coniques se fait par translation parallèle d'un segment le long d'un rayon polaire (S) (figures 4, 5).

12. Procédé selon la revendication 10, caractérisé par le fait que l'aboutement, l'un à l'autre, des segments de coupes coniques se fait par rotation d'un segment jusqu'à rendre parallèle une tangente (T2) à l'un de ses points d'extrémité (A2) à une tangente (T1) à un point d'extrémité (A1) de l'autre segment, puis translation de l'un des points d'extrémité mentionnés (figures 1, 2).

13. Procédé de génération d'une forme de réflecteur, caractérisé par le fait que l'on forme une courbe de coupe de départ à partir de segments de coupes coniques conformes à l'une des revendications 10 à 12 et que l'on étend et/ou que l'on rétreint cette courbe de coupe de départ d'un facteur de distances (k) pour obtenir une courbe de coupe dans un plan contenant un axe du réflecteur.

14. Réflecteur selon une des revendications 1 à 9, pour répartition du rayonnement en forme d'aile, caractérisée par le fait que le réflecteur présente une forme en cloche.

15. Réflecteur selon l'une des revendications 1 à 9 ou selon la revendication 14, comportant une source de rayonnement relativement longue, disposée transversalement par rapport à l'axe optique, pour produire une tache lumineuse de forme circulaire, caractérisé par le fait que la section du réflecteur qui intersecte l'axe optique est ovale.

Fig. 1

Fig. 2

Fig. 3

Fig. 4

Fig.5

Fig. 6

Fig. 7

Fig 8

Fig. 9

Fig. 10

Fig. 11

Fig. 12

$\overline{F}$

$O$

$H$

$F$

Fig. 13

Fig. 14

a.)

A

L

I-I

b.)

I

L

II          II

I

c.)

L

A

II-II

Fig. 15

EP 0 519 112 B1